# FASCICULE DE BREVET EUROPEEN

(11) **EP 0 511 887 B1**
(45) Date de publication et mention de la délivrance du brevet: **05.10.1994**
(21) Numéro de dépôt: 92401000.2
(22) Date de dépôt: 09.04.1992
(51) Int. Cl.: B60Q 3/04, G02F 1/1335

(54) **Dispositif indicateur pour véhicules automobiles**
Anzeigevorrichtung für Kraftfahrzeuge
Display device for automotive vehicles

(30) Priorité: 11.04.1991 FR 9104432
(43) Date de publication de la demande: 04.11.1992
(73) Titulaire: JAEGER, F-92303 Levallois-Perret (FR)
(72) Inventeur: Bonutto, Alain, F-95220 Herblay (FR); Blommaert, Gilbert, F-78930 Guerville (FR)
(74) Mandataire: Schrimpf, Robert

(56) Documents cités:
- US-A- 4 367 923
- US-A- 4 723 840

## Description

La présente invention concerne le domaine des dispositifs indicateurs mis à disposition des conducteurs de véhicules automobiles.

On a déjà proposé de nombreux dispositifs indicateurs disposés sur le tableau de bord des véhicules automobiles pour fournir au conducteur des indications diverses relatives aux véhicules telles que par exemple la vitesse de celui-ci, le niveau de carburant dans le réservoir, la température moteur, etc ...

Les dispositifs indicateurs connus ne donnent cependant pas toujours satisfaction.

En particulier, leur observation est souvent difficile le jour, en cas de forte luminosité ambiante.

On a déjà tenté à maintes reprises de proposer des systèmes comprenant une pièce optique apte à récupérer la lumière ambiante et à éclairer le dispositif indicateur, de sorte que l'éclairage de celui-ci soit asservi automatique à la luminosité ambiante. Il a également été proposé d'associer la pièce optique à une lampe d'éclairage pour éclairer le système la nuit.

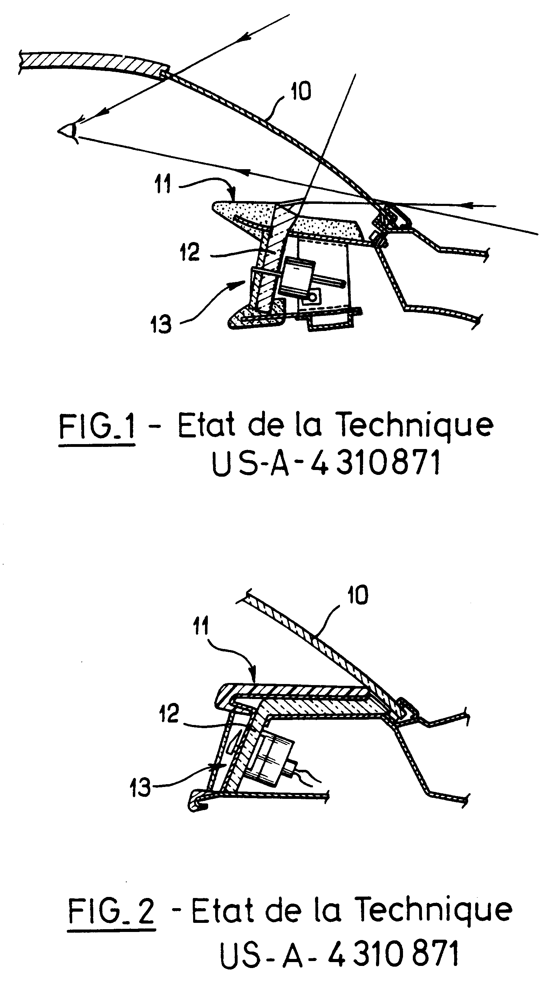

On a proposé par exemple dans le document US-A-4310871 publié en 1982, des systèmes du type représenté sur les figures 1 et 2 annexées. Sur les figures 1 et 2 le pare-brise du véhicule est référencé 10, la surface supérieure du tableau de bord est référencé 11, la pièce optique est référencée 12 et le dispositif indicateur est référencé 13. On comprend à l'examen des figures 1 et 2 annexées que la structure des pièces optiques 12 proposées dans le document US-A-4310871 est fort complexe. Par ailleurs, l'efficacité du système décrit dans ce document laisse à désirer.

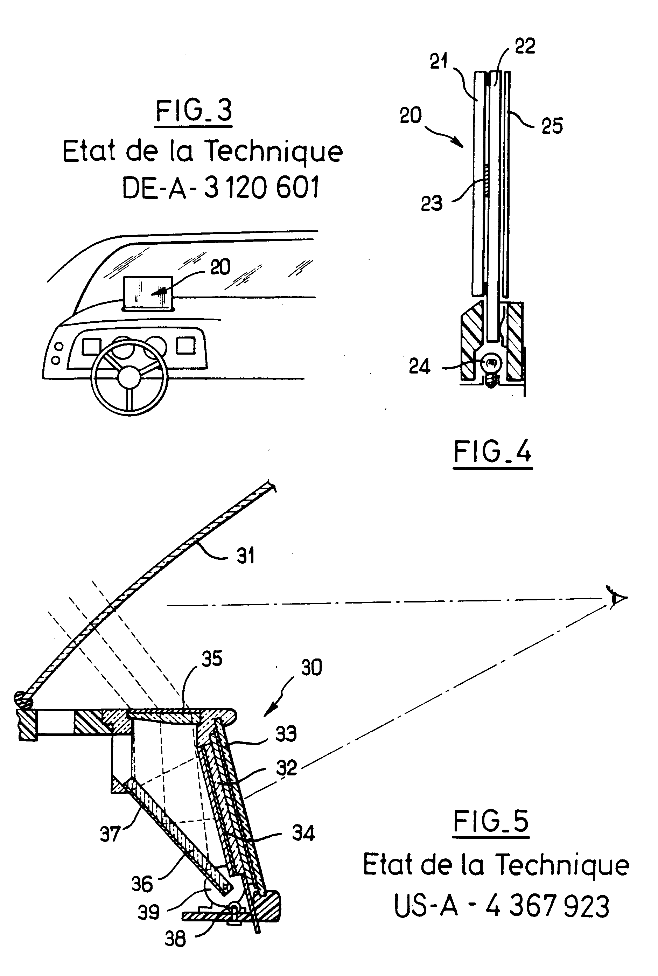

On a proposé dans le document DE-A-3120601 publié en 1981, de placer directement à l'intérieur du véhicule, en regard du pare-brise, un afficheur classique à cristaux liquides comme représenté en perspective sur la figure 3 annexée et en coupe verticale longitudinale sur la figure 4 annexée. On distingue sur cette figure 4, un afficheur à cristaux liquides 20 comprenant deux plaques de verre, parallèles, verticales 21, 22, contenant le matériau cristal liquide 23. On distingue la lampe d'éclairage 24 prévue sous l'afficheur 20 pour éclairer celui-ci. Selon le document DE-A-3120601, il est également proposé de placer un filtre semi-réfléchissant 25 devant l'afficheur 20 pour augmenter le contraste.

Le document US-A-4621306 publié en 1986 décrit un dispositif généralement similaire à celui proposé dans le document DE-A-3120601 et précédemment décrit en regard des figures 3 et 4 annexées.

On a proposé dans le document US-A-4367923 un système du type représenté sur la figure 5 annexée. Ce système est placé dans le tableau de bord 30. Sur la figure 5 le pare-brise est référencé 31. Ce syistème représenté sur la figure 5 comprend un afficheur à cristaux liquides 32 protégé sur l'avant par une plaque 33, et associé à une plaque diffusante arrière 34. Les moyens aptes à récupérer la lumière ambiante comprennent une lentille horizontale 35 et une pièce 36 réfléchissante sur une face 37. Cette pièce 36 est montée à pivotement autour d'un axe horizontal 37 entre une position éloignée de la plaque diffusante 34 comme représenté sur la figure 5 annexée, dans laquelle la pièce 36 reçoit la lumière ambiante traversant la lentille 35, et une position adjacente à la plaque diffusante 34 dans laquelle la pièce 36 renvoie vers l'afficheur 32 la lumière provenant d'une lampe 38 placée sous le système. On comprend que la pièce 36 est placée dans la première position le jour, et dans la seconde position la nuit. Le pivotement de la pièce 36 est commandé par les moyens moteurs 39. Le système représenté sur la figure 5 annexé ne donne pas satisfaction. Il est complexe, peu fiable, et peu efficace dès que de la poussière ou de la condensation se dépose sur la lentille 35.

On a également proposé dans le document US-A-4723840 publié en 1988 un système du type représenté sur la figure 6 annexée. Ce système comprend une plaquette de cristaux liquides 40 fonctionnant en transmission. La plaquette 40 est disposée devant une lame 41 de matériau transparent comportant des volets opaques parallèles conçus pour laisser passer la lumière ambiante. Des moyens 42 canalisent la lumière d'une source lumineuse 43 dans une direction sensiblement parallèle à la plaquette 40 vers la lame 41 de sorte que celle-ci réfléchisse vers la plaquette 40 la lumière reçue. Le système est aussi fort complexe et tributaire de l'état de surface de la lame 41.

A la connaissance de la Demanderesse en raison de leur complexité, de leur coût, et de leur fiabilité aléatoire les dispositifs précédemment décrits n'ont pas donné lieu à une exploitation industrielle.

Le but principal de la présente invention est de proposer un nouveau dispositif simple, robuste, fiable et économique, qui élimine les inconvénients de la technique antérieure.

Ce but est atteint selon la présente invention, grâce à un dispositif du type comprenant un imageur de type transmissif et une pièce optique apte à récupérer la lumière ambiante et à éclairer l'imageur, caractérisé par le fait que la pièce optique est formée d'une pièce à effet de prisme présentant une section droite verticale généralement triangulaire, l'imageur étant placé contre une face avant de la pièce optique et la face arrière de la pièce optique reposant contre la surface interne de la partie inférieure du pare-brise, tandis qu'une source lumineuse commandée est placée sous la surface inférieure de la pièce optique.

Le système conforme à la présente invention est simple. La pièce optique peut aisément être réalisée par moulage de matière plastique.

Elle est aussi très fiable du fait qu'elle ne comporte aucun élément mobile.

Enfin, la face arrière de la pièce optique contre le pare-brise et la face avant de la pièce optique étant protégée par l'imageur, aucun dépôtde poussière, salissure, ou condensation sur la pièce optique n'est à craindre.

Selon une autre caractéristique avantageuse de la présente invention, l'angle formé entre la face de la pièce optique placée contre le pare-brise et la face de la pièce optique qui reçoit l'imageur est inférieur à l'angle formé entre la face interne du pare-brise et la direction d'observation dressée à partir de l'oeil du conducteur en direction du sommet de la pièce optique.

D'autres caractéristiques, buts et avantages de la présente invention apparaîtront à la lecture de la description détaillée qui va suivre, et en regard de dessins annexés sur lesquels :

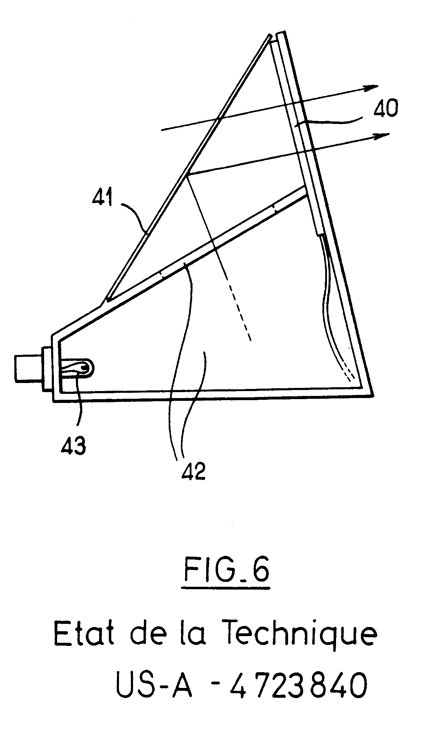

- les figures 1 à 6 précédemment décrites représentent l'état de la technique, tandis que
- la figure 7 représente, à titre d'exemple non limitatif, selon une vue en coupe verticale, la disposition et la structure d'un dispositif indicateur conforme à la présente invention, et
- la figure 8 représente une vue de détail, en coupe verticale, d'un dispositif conforme à la présente invention illustrant en particulier l'utilisation d'un joint d'étanchéité.

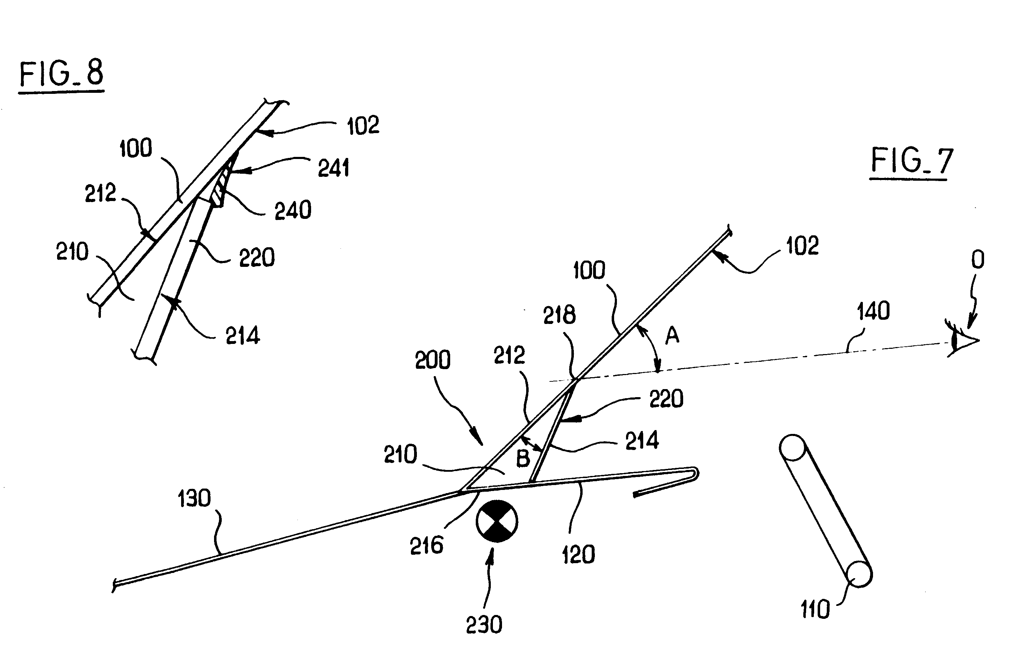

Sur la figure 7 annexée, on distingue, schématiquement représenté, sous la référence 100, le pare-brise d'un véhicule automobile, sous la référence 110, le volant du véhicule, sous la référence 120 la planche de bord interne, et sous la référence 130, le capot avant du même véhicule.

Sur la figure 7 on a par ailleurs représenté schématiquement sous la référence O l'oeil du conducteur.

Le dispositif indicateur conforme à la présente invention porte la référence générale 200 sur la figure 7 annexée. Ce dispositif indicateur 200 conforme à la présente invention comprend essentiellement une pièce optique 210 et un imageur 220.

De préférence le dispositif indicateur conforme à la présente invention comprend également un dispositif d'éclairage 230.

La pièce optique 210 est formée de préférence par moulage d'un matériau plastique, optiquement transparent ou translucide.

La pièce optique 210 présente une section droite verticale triangulaire délimitée par trois faces planes 212, 214 et 216. La face 212 de la pièce optique 210 est disposée contre la face interne 102 du pare-brise 100. La face 214 de la pièce optique 210, qui est dirigée vers l'intérieur du véhicule, supporte l'imageur 220. Enfin, la troisième face 216 de la pièce optique 210, qui forme la base de la pièce optique 210, repose sur la surface supérieure 122 de la planche de bord 120.

A titre d'exemple non limitatif, l'angle B formé entre les faces 212 et 214 de la pièce optique peut être de l'ordre de 25°, tandis que l'angle formé entre les faces 214 et 216 est de l'ordre de 165°, et que l'angle formé entre les faces 212 et 216 est de l'ordre de 40°.

La pièce optique 200 est ainsi placée sur la face interne 102 du pare-brise 100, à la base de celui-ci, c'est-à-dire juste au-dessus de la planche de bord 120.

Lorsque la pièce optique 210 est formée en matériau optiquement transparent et non point en matériau optiquement translucide, cette pièce 210 est très avantageusement munie d'une face diffusante. La face diffusante de la pièce 210 peut être formée de la face 212 adjacente au pare-brise 100. En variante on peut prévoir un élément diffusant intermédiaire, dans la masse de la pièce 210, cette dernière étant surmoulée sur l'élément diffusant.

L'élément diffusant de la pièce 210 ou l'aspect translucide de celle-ci sont destinés notamment à éviter la formation d'une tache ombrée sur l'imageur 220 lorsque les essuie-glaces du véhicule sont placés devant la pièce 210.

La face diffusante peut être formée d'une face dépolie ou d'une face munie de creux, bombages ou irrégularités.

L'imageur 220 utilisé dans le cadre de la présente invention, et placé sur la face 214 de la pièce optique 210 est un imageur de type transmissif. A cet effet, la présente invention peut utiliser tout type d'imageur transmissif connu de l'homme de l'art.

Il s'agit de préférence d'un imageur à cristaux liquides. Très préférentiellement dans le cadre de la présente invention, l'imageur 220 est un imageur de type LCID (Large Color Integrated Display). De tels imageurs de type LCID sont bien connus de l'homme de l'art. Ils sont commercialisés notamment par la Société RAFI GmbH.

Les afficheurs de type LCID connus de l'homme de l'art ne seront pas décrits dans le détail par la suite. On rappellera simplement qu'ils se caractérisent essentiellement par l'utilisation de membranes extérieures en polyester à la place des plaques de verre classiques d'une part, et l'incorporation de billes de cristaux liquides dans un film polymère d'autre part.

Le cas échéant, l'imageur 220 peut comprendre en outre des voyants indicateurs et des systèmes à aiguille.

La pièce optique 210 travaille à la façon d'un prisme pour diriger vers l'imageur 220 la lumière ambiante traversant le pare-brise 10. Ainsi, l'imageur 220 est éclairé de jour par la lumière du jour. De ce fait l'éclairage de l'imageur 220 est asservi automatiquement sur la luminosité ambiante, et visible avec un contraste sensiblement constant quelle que soit la luminosité.

La pièce optique 210 peut bien entendu faire l'objet de nombreuses variantes de réalisation quant à sa géométrie, notamment en fonction de l'inclinaison du pare-brise 100 sur la verticale.

Selon une caractéristique avantageuse de la présente invention, la face 214 de la pièce optique 210 dirigée vers l'intérieur du véhicule et qui reçoit l'imageur 220 est inclinée sur la verticale d'un angle de l'ordre de 30°. Cette face 214 est dirigée vers l'avant du véhicule en direction du sol.

Selon une autre caractéristique avantageuse de la présente invention, il est prévu un moyen d'éclairage 230 sous la pièce à effet de prisme 210. Ces moyens d'éclairage 230 peuvent être formés de toute structure classique connue de l'homme de l'art. Il s'agit de moyens d'éclairage à commande électrique, tels que des ampoules à filament, des diodes électroluminescentes ou tous moyens équivalents. De préférence, les moyens d'éclairage 230 sont placés sous la planche de bord 120 en regard de la face de base 216 de la pièce optique 210, de sorte que ces moyens d'éclairage 230 ne soient pas visibles directement par le conducteur du véhicule.

Il peut s'agir de moyens émettant des ultra-violets. Cette disposition est particulièrement intéressante si l'imageur est sensible aux U.V.

Dans ce cas, la pièce optique 210 doit être transparente aux U.V.

Les moyens d'éclairage 130 sont alimentés la nuit pour éclairer l'imageur 220, par l'intermédiaire de la pièce optique 210.

Le cas échéant, la face avant 212 de la pièce optique 210 peut être munie d'un traitement ou d'un élément accessoire formant valve optique, conçu pour laisser passer la lumière ambiante venant de l'extérieur et traversant le pare-brise 100 vers l'imageur 220, mais pour réfléchir vers l'intérieur de la pièce optique 210, en direction de l'imageur 220, la lumière provenant des moyens 230. De tels moyens formant valve sont conçus pour éviter que ces moyens 230 et la pièce optique 210 ne soient visibles la nuit, de l'extérieur du véhicule.

Selon une autre caractéristique avantageuse de la présente invention comme indiqué précédemment, l'angle B formé entre les faces 212 et 214 de la pièce optique 210 est inférieur à l'angle A formé entre le pare-brise 100 et la direction d'observation 140 dressée à partir de l'oeil O du conducteur en direction du sommet 218 de la pièce optique 210. Grâce à la relation précitée (B < A) on évite la formation d'un reflet image de l'imageur 220 sur la face interne du pare-brise 100 qui pourrait être visible par le conducteur.

Les imageurs 220 utilisés dans le cadre de la présente invention peuvent être non seulement transmissifs, mais de plus réflectifs pour récupérer la lumière provenant de l'intérieur de l'habitacle. On les nomme dans ce cas imageurs transflectifs.

Le cas échéant, un joint d'étanchéité 240 peut être prévu sur la périphérie de la face 212 de la pièce optique 210, afin d'une part d'éviter le fuite de lumière à ce niveau et afin de garantir d'autre part, l'étanchéité entre le pare-brise et la pièce optique pour éviter la pénétration de poussière à ce niveau.

Ce joint 240 est avantageusement réalisé par une lèvre caoutchouc qui s'applique sur le pare brise.

Ce joint 240 peut être prévu sur toute la périphérie de la face 212 de la pièce optique 210. On le voit représenter en coupe verticale en partie supérieure de la pièce optique sur la figure 8. Le joint 240 peut être adapté pour supprimer toute discontinuité ou point anguleux entre le pare brise et l'imageur 220 ou la pièce optique 210. L'angle du joint 240 par rapport au pare brise 100 est tel qu'il n'y a pas de reflet sur le pare brise 100. Pour cela, l'angle formé entre la face externe 241 du joint 240 et le pare brise 100 est inférieur à l'angle formé entre le pare brise 100 et la direction d'observation 140 dressée à partir de l'oeil O du conducteur.

Selon une autre caractéristique avantageuse de l'invention, les côtés latéraux de la pièce optique 210 sont noirs et orientés convenablement pour éviter les reflets sur le pare brise.

## Revendications

1. Dispositif indicateur pour véhicules automobiles du type comprenant un imageur (220) de type transmissif et une pièce optique (210) apte à récupérer la lumière ambiante et à éclairer l'imageur (220), caractérisé par le fait que la pièce optique (220) est formée d'une pièce à effet de prisme présentant une section droite verticale généralement triangulaire, l'imageur (220) étant placé contre une face avant (214) de la pièce optique (210) et la face arrière (212) de la pièce optique (210) reposant contre la surface interne (102) de la partie inférieure du pare-brise (100), tandis qu'une source lumineuse commandée (230) est placée sous la surface inférieure (216) de la pièce optique (210).

2. Dispositif selon la revendication 1, caractérisé par le fait que l'angle (B) formé entre la face (212) de la pièce optique (210) placée contre le pare-brise (100) et la face (214) de la pièce optique (210) qui reçoit l'imageur (220) est inférieur à l'angle (A) formé entre la face interne (102) du pare-brise (100) et la direction d'observation (140) dressée à partir de l'oeil (O) du conducteur en direction du sommet (218) de la pièce optique (210).

3. Dispositif selon la revendication 2, caractérisé par le fait que l'angle (B) formé entre la face (212) de la pièce optique (210) placée contre le pare-brise (100) et la face (214) de la pièce optique (210) recevant l'imageur (220) est de l'ordre de 25°.

4. Dispositif selon l'une des revendications 1 à 3, caractérisé par le fait que l'inclinaison sur la verticale de la face (214) de la pièce optique (210) qui porte l'imageur (220) est de l'ordre de 30°.

5. Dispositif selon l'une des revendications 1 à 4, caractérisé par le fait que l'imageur (220) est un imageur du type à cristaux liquides très préférentiellement un imageur du type LCID.

6. Dispositif selon l'une des revendications 1 à 5, caractérisé par le fait que le dispositif imageur (220) comprend des voyants indicateurs et des aiguilles.

7. Dispositif selon l'une des revendications 1 à 6, caractérisé par le fait que la pièce optique (210) est réalisée en un matériau transparent ou translucide.

8. Dispositif selon l'une des revendications 1 à 7, caractérisé par le fait que la pièce optique (210) comprend au moins une face (112) diffusante.

9. Dispositif selon la revendication 8, caractérisé par le fait que la face diffusante de la pièce optique (210) est dépolie ou comprend des creux, bombages ou irrégularités.

10. Dispositif selon l'une des revendications 1 à 7, caractérisé par le fait qu'il est prévu un élément diffusant dans la masse de la pièce optique (210).

11. Dispositif selon l'une des revendications 1 à 10, caractérisé par le fait que la face de la pièce optique (210) placée contre le pare-brise (100) comprend un élément formant valve optique conçu pour laisser passer la lumière extérieure traversant le pare-brise (100) en direction de l'imageur (220) mais pour occulter la lumière de la pièce optique (210) vers l'extérieur du véhicule.

12. Dispositif selon l'une des revendications 1 à 11, caractérisé par le fait que l'imageur (220) est de type transflectif.

13. Dispositif selon l'une des revendications 1 à 12, caractérisé par le fait que le joint d'étanchéité est prévu sur la périphérie de la face arrière (212) de la pièce optique (210).

14. Dispositif selon la revendication 13, caractérisé par le fait que l'angle de la surface (241) du joint (240) par rapport au pare brise est inférieur à l'angle (A) formé entre la face interne (102) du pare brise (100) et la direction d'observation (140) dressée à partir de l'oeil.

15. Dispositif selon l'une des revendications 13 ou 14, caractérisé par le fait que le joint (240) est un joint à lèvre.

## Claims

1. An indicator device for motor vehicles of the type comprising an imager (220) of the transmissive type and an optical part (210) capable of recovering the ambient light and of illuminating the imager (220), characterised in that the optical part (220) is formed of a prism effect part having a generally triangular vertical crosssection, the imager (220) being placed against a front face (214) of the optical part (210) and the rear face (212) of the optical part (210) resting against the internal surface (102) of the lower portion of the windscreen (100), while a controlled light source (230) is placed under the lower surface (216) of the optical part (210).

2. A device according to claim 1, characterised in that the angle (B) formed between the face (212) of the optical part (210) placed against the windscreen (100) and the face (214) of the optical part (210) which accommodates the imager (220) is less than the angle (A) formed between the internal face (102) of the windscreen (100) and the viewing direction (140) aligned from the eye (O) of the driver in the direction of the top (218) of the optical part (210).

3. A device according to claim 2, characterised in that the angle (B) formed between the face (212) of the optical part (210) placed against the windscreen (100) and the face (214) of the optical part (210) accommodating the imager (220) is of the order of 25°.

4. A device according to one of claims 1 to 3, characterised in that the angle of inclination from the vertical of the face (214) of the optical part (210) which holds the imager (220) is of the order of 30°.

5. A device according to one of claims 1 to 4, characterised in that the imager (220) is an imager of the liquid crystal type, very preferentially an imager of the LCID type.

6. A device according to one of claims 1 to 5, characterised in that the imaging device (220) comprises indicator lamps and pointers.

7. A device according to one of claims 1 to 6, characterised in that the optical part (210) is produced from a transparent or translucent material.

8. A device according to one of claims 1 to 7, characterised in that the optical part (210) comprises at least one diffusing face (112).

9. A device according to claim 8, characterised in that the diffusing face of the optical part (210) is frosted or comprises cavities, swellings or irregularities.

10. A device according to one of claims 1 to 7, characterised in that a diffusing element is provided in the body of the optical part (210).

11. A device according to one of claims 1 to 10, characterised in that the face of the optical part (210) placed against the windscreen (100) comprises an element forming an optical valve designed to let through the external light passing through the windscreen (100) in the direction of the imager (220), and to block the light from the optical part (210) towards the outside of the vehicle.

12. A device according to one of claims 1 to 11, characterised in that the imager (220) is of the transflective type.

13. A device according to one of claims 1 to 12, characterised in that the seal is provided on the periphery of the rear face (212) of the optical part (210).

14. A device according to claim 13, characterised in that the angle of the surface (241) of the seal (240) in relation to the windscreen is less than the angle (A) formed between the internal face (102) of the windscreen (100) and the viewing direction (140) aligned from the eye.

15. A device according to one of claims 13 or 14, characterised in that the seal (240) is a lip seal.

## Patentansprüche

1. Anzeigevorrichtung für Kraftfahrzeuge, mit einem Bildbildner (220) des Transmissionstyps und einem optischen Teil (210), welches zur Gewinnung von Umgebungslicht und Beleuchtung des Bildbildners (220) geeignet ist, dadurch gekennzeichnet, daß das optische Teil (220) durch ein Teil mit Prismeneffekt gebildet ist, welches einen im wesentlichen dreieckigen vertikalen Querschnitt hat, wobei der Bildbildner (220) gegen eine Vorderfläche (214) des optischen Teils (210) angeordnet ist und die Rückfläche (212) des optischen Teils (210) gegen die Innenseite (102) des unteren Abschnitts der Windschutzscheibe (100) aufruht, während eine gesteuerte Lichtquelle (230) unter der Innenseite (216) des optischen Teils (210) angeordnet ist.

2. Vorrichtung nach Anspruch 1, dadurch gekennzeichnet, daß der Winkel (B), der zwischen der gegen die Windschutzscheibe (100) angeordneten Fläche (212) des optischen Teils (210) und der Fläche (214) des optischen Teils (210), welche den Bildbildner (220) aufnimmt, ausgebildet ist, kleiner als der Winkel (A) ist, der zwischen der Innenfläche (102) der Windschutzscheibe (100) und der vom Auge (O) des Fahrers in Richtung des Scheitels (218) des optischen Teils (210) errichteten Beobachtungsrichtung (140) ausgebildet ist.

3. Vorrichtung nach Anspruch 2, dadurch gekennzeichnet, daß der Winkel (B), der zwischen der gegen die Windschutzscheibe (100) angeordneten Fläche (212) des optischen Teils (210) und der Fläche (214) des optischen Teils (210), die den Bildbildner (220) aufnimmt, ausgebildet ist, von der Größenordnung 25° ist.

4. Vorrichtung nach einem der Ansprüche 1 bis 3, dadurch gekennzeichnet, daß die Neigung der Fläche (214) des optischen Teils (210), welche den Bildbildner (220) trägt, gegenüber der Vertikalen von der Größenordnung 30° ist.

5. Vorrichtung nach einem der Ansprüche 1 bis 4, dadurch gekennzeichnet, daß der Bildbildner (220) ein Bildbildner vom Flüssigkristalltyp, sehr vorzugsweise ein Bildbildner vom LCID-Typ ist.

6. Vorrichtung nach einem der Ansprüche 1 bis 5, dadurch gekennzeichnet, daß die Bildbildnervorrichtung (220) Warnanzeigen und Zeiger aufweist.

7. Vorrichtung nach einem der Ansprüche 1 bis 6, dadurch gekennzeichnet, daß das optische Teil (210) aus durchsichtigem oder durchscheinendem Material hergestellt ist.

8. Vorrichtung nach einem der Ansprüche 1 bis 7, dadurch gekennzeichnet, daß das optische Teil (210) wenigstens eine zerstreuende Fläche (112) aufweist.

9. Vorrichtung nach Anspruch 8, dadurch gekennzeichnet, daß die zerstreuende Fläche des optischen Teils (210) mattiert ist oder Höhlungen, Bombierungen oder Irregularitäten aufweist.

10. Vorrichtung nach einem der Ansprüche 1 bis 7, dadurch gekennzeichnet, daß in der Masse des optischen Körpers (210) ein zerstreuendes Element vorgesehen ist.

11. Vorrichtung nach einem der Ansprüche 1 bis 10, dadurch gekennzeichnet, daß die gegen die Windschutzscheibe (100) angeordnete Fläche des optischen Teils (210) ein ein optisches Ventil bildendes Element aufweist, das so ausgelegt ist, daß es die Windschutzscheibe (100) in Richtung des Bildbildners (220) durchsetzendes Außenlicht durchläßt, aber das Licht des optischen Teils (210) zum Äußeren des Fahrzeugs hin verdunkelt.

12. Vorrichtung nach einem der Ansprüche 1 bis 11, dadurch gekennzeichnet, daß der Bildbildner (220) vom transflektiven Typ ist.

13. Vorrichtung nach einem der Ansprüche 1 bis 12, dadurch gekennzeichnet, daß die Dichtung am Rand der Rückfläche (212) des optischen Teils (210) vorgesehen ist.

14. Vorrichtung nach Anspruch 13, dadurch gekennzeichnet, daß der Winkel der Oberfläche (241) der Dichtung (240) in Bezug auf die Windschutzscheibe kleiner als der Winkel (A) ist, der zwischen der Innenfläche (102) der Windschutzscheibe (100) und der vom Auge aus errichteten Beobachtungsrichtung (140) gebildet wird.

15. Vorrichtung nach einem der Ansprüche 13 oder 14, dadurch gekennzeichnet, daß die Dichtung (240) eine Lippendichtung ist.
